# EUROPÄISCHE PATENTSCHRIFT

(11) **EP 0 383 327 B1**
(45) Veröffentlichungstag und Bekanntmachung des Hinweises auf die Patenterteilung: **09.06.1993**
(21) Anmeldenummer: 90102964.5
(22) Anmeldetag: 15.02.1990
(51) Int. Cl.: F22B 1/28, A47J 27/16

(54) **Dampferzeuger für Gargeräte mit Entkalkungseinrichtung**
Cooking steam generator with a descaling device
Chaudière à vapeur avec détartrage pour appareil de cuisson

(30) Priorität: 17.02.1989 DE 8901904 U
(43) Veröffentlichungstag der Anmeldung: 22.08.1990
(73) Patentinhaber: LechMetall Landsberg GmbH Edelstahlerzeugnisse, D-86899 Landsberg (DE)
(72) Erfinder: Rabe, Hermann, D-8910 Landsberg/Lech (DE); Klouda, Jaroslav, D-8080 Fürstenfeldbruck (DE); Lafuntal, Ladislav, D-8031 Esting (DE); Meister, Siegfried, D-8910 Landsberg/Lech (DE)
(74) Vertreter: Goddar, Heinz J., Dr.

(56) Entgegenhaltungen:
- EP-A- 0 280 782
- CH-A- 656 203
- DE-A- 3 720 583
- GB-A- 255 338
- US-A- 4 107 511

## Beschreibung

Die Erfindung betrifft einen Dampferzeuger für Gargeräte, insbesondere für im Kombinationsbetrieb mit Heißluft und Heißdampf arbeitende Tisch- oder Standgeräte für die Gastronomie, Großküchen oder dergleichen, mit einem wassergefüllten Kessel, der einen automatisch niveauregulierten Wasserzulauf, einen Dampfauslaß zum bedarfsweisen automatischen Einführen von Heißdampf in den Garraum des Gargerätes und eine intervallweise arbeitende Heizvorrichtung, z. B. in Form von elektrisch oder mittels Gasbeheizung erhitzbaren Wärmetauscherflächen, aufweist und mit einer Entkalkungseinrichtung mit einer nahe dem Boden und der Seitenwand des Kessels angeordneten Wasserablaßeinrichtung zum bedarfsweisen - zumindest teilweisen - Leeren des Kessels zwecks Ausschwemmens abgeplatzter, am Boden des Kessels sich sammelnder Kalkpartikel.

Bei derartigen Dampferzeugern, die normalerweise infolge intensiver Nutzung der betreffenden Gargeräte starken thermischen Belastungen ausgesetzt sind, besteht das Problem, daß sich im Laufe der Zeit sowohl an den Wärmetauscherflächen der Heizeinrichtung - im Fall von elektrisch betriebenen Geräten also an den entsprechenden Heizstäben oder Heizschlangen, im Fall von gasbetriebenen Geräten an den entsprechenden Wärmetauscherrohren - starke Kalkablagerungen bilden. Kalkablagerungen treten weiterhin auch an den Kesselwänden auf. Von Zeit zu Zeit müssen diese Kalkablagerungen entfernt werden, da sie den Wärmeübergang an den Wärmetauscherflächen behindern, sie müssen jedoch auch von den Innenflächen des Kessels entfernt werden, da sie negative Einflüsse auf die Qualität des erzeugten Dampfes haben können, weil sich in den betreffenden Kalkablagerungen bestimmte Stoffe konzentrieren können, die zum Beispiel die Eigenschaften des erzeugten Dampfes in negativer Weise hinsichtlich des Geschmackes der zu garenden Erzeugnisse beeinflussen können.

Es ist bekannt, die Kalkablagerungen dadurch zu entfernen, daß der Benutzer des Gargerätes in mehr oder weniger regelmäßigen Intervallen durch Einbringen eines chemisch wirkenden Entkalkungsmittels in den Kessel und Erhitzen außerhalb des Normalbetriebes die Kalkablagerungen löst, die dann beispielsweise durch einen speziell hierfür vorgesehenen Ablaßhahn unter Leeren des Kessels abgelassen werden können.

Auch ohne das Einbringen eines chemisch wirkenden Entkalkungsmittels kann eine gewisse Entkalkungswirkung erreicht werden.

Die US-A-1 616 372 beschreibt eine Reinigungsvorrichtung für Heizgeräte, die aus einer flachen Kammer besteht, welche am Boden des Heizgerätes angeordnet ist und mit einer Vielzahl von Öffnungen versehen ist, die so angeordnet sind, daß beim Öffnen eines Ventils, welches mit der Reinigungskammer in Verbindung steht, das ausströmende Medium die Ablagerungen im Heizgerät durch die Reinigungskammer abführen. Hierbei wird ausgenutzt, daß im Heizgerät ein gewisser Überdruck herrscht. Die Entkalkungswirkung ist dabei jedoch höchst unvollkommen. Dies beruht einerseits darauf, daß es notwendig ist, daß der Benutzer tatsächlich in gewissen Intervallen die Entkalkung durch Betätigen des Ablaßhahnes bewirkt, eine Maßnahme, die häufig infolge von Unachtsamkeit unterlassen wird. Weiterhin reicht der in den Geräten der eingangs genannten Gattung entstehende Druck bei weitem nicht aus, die Sedimentpartikel zuverlässig abzuführen. Zudem gelangen nur solche Kalkpartikel in den Reinigungsbehälter, die sich leicht von den Wärmetauschern bzw. von den Innenflächen des Kessels lösen. Stark anhaftende Kalkteilchen führen weiterhin zu den Behinderungen, wie sie weiter oben erwähnt wurden.

Es ist auch bekannt, einen Ablaßhahn als Wasserablaßeinrichtung zu verwenden, um die sich am Boden des Kessels in Form kleiner Partikel ansammelnden Kalkteilchen von Zeit zu Zeit abzulassen. Die beim Leeren des Kessels auftretende Strömung reicht aber in keiner Weise dazu aus, die am Boden des Kessels abgelagerten Kalkpartikel durch den Ablaßhahn hinauszubefördern, vielmehr ist dieser regelmäßig schon kurz nach Beginn eines Entkalkungsvorganges, d. h. nach dem Öffnen des Ablaßhahnes, verstopft, so daß die Kalkablagerungen nicht zuverlässig entfernt werden können. Auch verstopfen die in das Innere des Ablaßhahnes und in dessen Schließmechanik eintretenden Kalkpartikel diesen mangels einer ausreichenden Stromungsrate des abfließenden Wassers immer mehr, so daß nach relativ kurzen Betriebszeit eine Wirksame Entkalkung nicht mehr gewährleistet ist.

Die US-A 4,107,511 beschreibt einen Dampferzeuger mit den Merkmalen des Oberbegriffes der Patentansprüche 1 und 9. Bei diesem bekannten Dampferzeuger wird eine durch das Öffnen eines Ventils erzeugte Strömung ausgenutzt, um Salze, die sich auf Elektroden im Dampferzeuger abgelagert haben, auszuspülen. Dieses Ventil befindet sich stromabwärts des Auslasses aus dem Dampferzeuger und wirkt mit dem erhöhtem Druck im Dampfraum zusammen. Hier ist zu besorgen, daß Bereiche des Dampferzeugers, die von der Strömung allenfalls peripher erfaßt werden, nicht ausreichend von Ablagerungen befreit werden.

Der Erfindung liegt daher die Aufgabe zugrunde, einen Dampferzeuger der gattungsgemäßen Art zu schaffen, welcher ohne Einwirkung des Benutzers automatisch eine verbesserte Entfernung des störenden Kalkes gewährleistet.

Diese Aufgabe wird einerseits von dem Dampferzeuger gelöst, der die Merkmale des Patentanspruches 1 zeigt, andererseits von einem Dampferzeuger, der die Merkmale des Patentanspruches 9 zeigt. Vorteilhafte Ausgestaltungen ergeben sich jeweils aus den Kennzeichen der Unteransprüche.

Erfindungsgemäß ist einerseits vorgesehen, daß die in Intervallen in Abhängigkeit von der Betriebsdauer und/oder - Temperatur der Heizeinrichtung automatisch sich einschaltende Einrichtung zum Erzeugen einer Strömung eine Ausschwemmpumpe aufweist, wobei nahe dem Boden des Kessels an einer der Ausschwemmpumpe diametral gegenüberliegenden Stelle nahe der Kesselwand ein gemeinsam mit der Ausschwemmpumpe zu- und abschaltbarer Ausschwemmzufluß angeordnet ist.

Es kann vorgesehen sein, daß die Ausschwemmpumpe und/oder der Ausschwemmzufluß nahe dem Boden des Kessels die Kesselwand durchsetzen. Ferner ist gegebenenfalls vorgesehen, daß die Heizeinrichtung unter Freilassen eines im wesentlichen strömungshindernisfreien Ausschwemmweges oberhalb des Niveaus der Ausschwemmpumpe und des Ausschwemmzuflusses angeordnet ist. Es kann auch vorgesehen sein, daß im Strömungsweg zwischen der Ausschwemmpumpe und dem Ausscbwemmzufluß Strömungsleitvorrichtungen, beispielsweise Strömungsleitfläcben oder dergleicben, angeordnet sind. Die Ausschwemmpumpe kann in Ruhestellung eine offene Strömungsverbindung zwiscben dem Kessel und dem Wasserzulauf des Gargerätes bilden. Weiterbin wird vorgeschlagen, daß der Wasserzulauf einen mit der Atmosphäre oberhalb des Wasserniveaus im Kessel kommunizierenden Überdruckauslaß aufweist.

Besonders bevorzugt ist es, wenn der Boden des Kessels von dem Ausschwemmzufluß zu der Ausschwemmpumpe geneigt verläuft.

Dieser Ausführungsform liegt die überraschende Erkenntnis zugrunde, daß es mittels der beanspruchten Kombination einer Ausschwemmpumpe und eines Ausschwemmzuflusses, der sich an einer diametral der Position der Ausschwemmpumpe gegenüberliegenden Stelle des Kessels befindet, gelingt, die sich am Boden des Kessels ansammelnden Kalkpartikel infolge der starken Strömung und der Zwangsförderung mittels der Ausschwemmpumpe zuverlässig auszuschwemmen. Vorzugsweise dient die Pumpe selbst, beispielsweise als Kreiselpumpe ausgebildet, unter Aufrechterhaltung einer freien Strömungsverbindung zwiscben dem Wasser im Kessel und dem Wasserzulauf im "Normalzustand", in dem sie also nicht arbeitet, als Teil des Wasserzuflusses, wodurch das Innere der Pumpe von Kalkpartikeln vollständig freigehalten wird. Immer dann, wenn die Pumpe anspringt, befinden sich also keine Kalkpartikel innerhalb der Pumpe, die ansonsten ein einwandfreies Starten behindern könnten. Vorzugsweise ist der Ablauf der Ausschwemmpumpe mit dem ohnehin vorhandenen Kondensatablauf des Gargerätes verbunden, so daß kein zusatzlicher Ablauf notwendig ist. Um sicherzustellen, daß die Entkalkungseinrichtung nur dann betätigt wird, wenn kein Normalbetrieb des Gargerätes vorliegt, ist es von Vorteil, wenn durch geeignete Steuerungseinstellung dafür Sorge getragen wird, daß die Ausschwemmpumpe und der Ausschwemmzufluß nur dann betätigt werden können, wenn die Wassertemperatur innerhalb des Kessels zum Beispiel weniger als 50 °C beträgt und das Gargerät zum Beispiel mindestens 8 Stunden ausgeschaltet war. Von besonderem Vorteil ist eine Ausführungsform der Erfindung, bei welcher, wie beansprucht, die Verbindung der Ausschwemmpumpe mit dem Wasserzulauf gleichzeitig als Überdruckventil für den Garraum wirkt, wodurch auf ein zusätzliches Überdruckventil im Garraum verzichtet werden kann.

Eine weitere Ausführungsform der Erfindung ist dadurch gekennzeichnet, daß eine Strömungserzeugungseinrichtung vorgesehen ist, welche während des Betriebes, insbesondere des Dampferzeugers, das Kesselwasser zum vorzugsweise pulsierenden und/oder periodisch wechselnden Strömen bringt und dabei sowohl bereits abgelagerte als auch noch im Kesselwasser befindliche Kalkpartikel mitreißt und zu der als Sedimentbehälter ausgebildeten Ausscheidevorrichtung befördert.

Dabei kann vorgesehen sein, daß die Strömungserzeugungseinrichtung eine mit dem Dampferzeuger verbundene Dampfpumpe aufweist, welche eine Kühleinrichtung umfaßt, und daß der Sedimentbehälter im unteren Bereich der Dampfpumpe angeordnet ist.

Auch sieht die Erfindung gegebenenfalls vor, daß die Strömungserzeugungseinrichtung eine mechanisch betriebene Pumpe aufweist.

Die vorstehend beschriebene Dampfpumpe kann in dem Dampferzeuger integriert oder als separate Einheit ausgebildet sein, wobei die Dampfpumpe jedesmal über eine Wasserverbindung und eine Dampfverbindung mit dem Dampferzeuger kommuniziert. Die Kühlwassereinrichtung umfaßt eine Kühlwasserzufuhr, die identisch mit der Wasserzufuhr für den Dampferzeuger sein kann. Wenn das Kühlwasser gesteuert auf die Dampfpumpe aufgegeben wird, kühlt sich das darin befindliche Medium, nämlich Dampf und Wasser, ab, wodurch in der Dampfpumpe ein Unterdruck erzeugt wird. Dieser Unterdruck bewirkt wiederum eine starke Strömung des im Dampferzeuger befindlichen Wassers in die Dampfpumpe hinein. Durch die Strömung mitgeführte Partikel sinken durch das Eigengewicht in den Sedimentbehälter ab. Weiterhin wird durch das Kühlwasser das in der Dampfpumpe befindliche Wasser abgekühlt, so daß dieses Wasser an Kalk übersättigt ist und es zu einer intensiven Bildung von Kalkpartikeln in der Dampfpumpe kommt. Diese Partikel lagern sich gleichfalls im Sedimentbehälter ab und können von dort entnommen werden.

Beim Dampferzeuger gemäß der vorliegenden Erfindung wird durch die Strömung des Wassers im Dampferzeuger die auf den Flächen des Dampferzeugers gebildete Kalkschicht durch die erosive Wirkung des pulsierend strömenden Wassers abgetragen oder Abplatzen gebracht. Die Reinigungswirkung geht also über eine bloße Reinigung des Wassers hinaus und umfaßt auch Ablagerungen an der Heizvorrichtung und an den Innenwänden des Kessels.

Weitere Merkmale und Vorteile der Erfindung ergeben sich aus der nachstehenden Beschreibung, in der die Erfindung beispielhaft anhand der in den Zeichnungen dargestellten Ausführungsformen erläutert wird; dabei zeigt:
- Fig. 1: ein erstes Ausführungsbeispiel des Dampferzeugers in einer schematischen Schnittansicht;
- Fig. 2: ein zweites Ausführungsbeispiel des Dampferzeugers in einer schematischen Schnittansicht;
- Fig. 3: ein drittes Ausführungsbeispiel des Dampferzeugers mit pulsierend strömendem Wasser und mit integrierter Dampfpumpe; und
- Fig. 4: ein viertes Ausführungsbeispiel des Dampferzeugers mit pulsierend strömendem Wasser und mit separater Dampfpumpe.

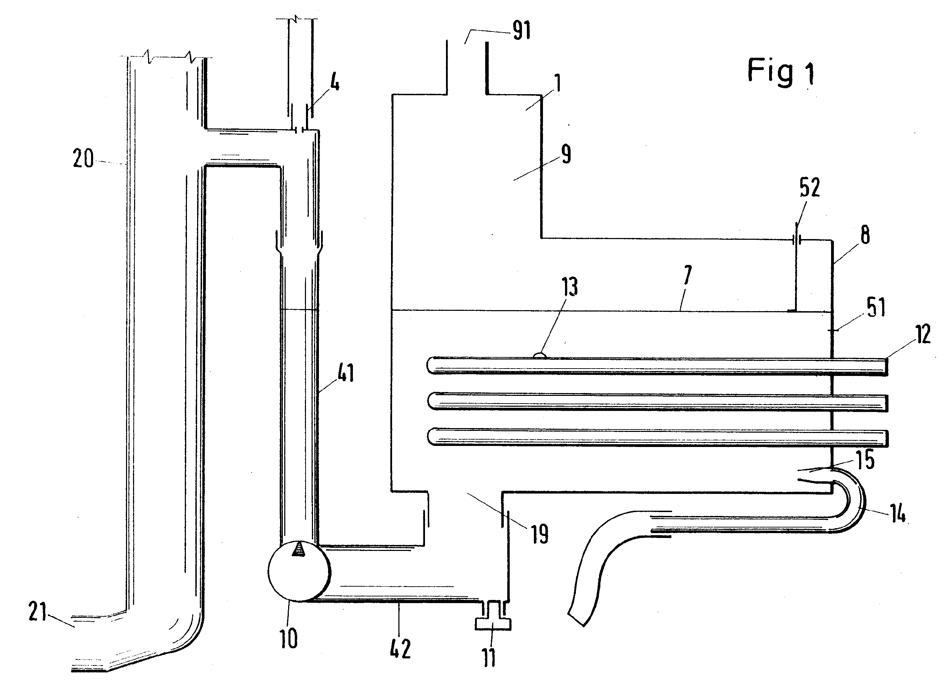

Fig. 1 zeigt eine Ausführungsform des Dampferzeugers 1, bei dem der Kessel 8 mit einem domartigen Oberteil 9 versehen ist, aus dem über einen Dampfaustrittsstutzen 91 Dampf abgeführt werden kann. Das im Kessel 8 befindliche Wasser wird mit horizontal liegenden Heizrohren 12 beheizt. Die Temperatur der Heizrohre 12 wird über einen Temperatursensor 13 erfaßt. Den Normalwasserstand 7 stellt ein Normalwasserstands-Sensor 52 über den Frischwasserzulauf 4 mittels eines hier nicht dargestellten Zulaufmagnetventils ein. Das Frischwasser gelangt über den Pumpendruckschlauch 41 und über die Ausschwemmpumpe 10 sowie den Pumpenanschluß 42 durch die Bodenöffnung 19 in den Kessel 8 des Dampferzeugers 1. Eine hier nicht dargestellte elektronische Steuerschaltung überwacht die Nutzungsdauer des Dampferzeugers 1 oder das Einschalten des Gerätes und führt eine Abfrage des Temperatursensors 13 durch. Wenn der Temperaturwert ergibt, daß die Heizrohre 12 nicht betrieben werden, wird die Ausschwemmpumpe 10 betätigt und gleichzeitig der Wasserzufluß über den Ausschwemmzufluß 14 freigegeben, welcher in Bodennähe an der Wand des Kessels 8 diametral gegenüber der Ausschwemmpumpe 10 angeordnet ist. Der Ausschwemmzufluß 14 kann eine Spüldüse 15 aufweisen, wodurch eine Erhöhung der Ausströmgeschwindigkeit des Wasser bewirkt wird. Die Steuerung des Ausschwemmzuflusses 14 kann beispielsweise über ein Spülmagnetventil erfolgen. Der auf dem Boden des Kessels 8 lagernde Kalk - aus dem Wasser und von Heizkörperabplatzungen - wird zum größten Teil vom Strahl aus der Spüldüse 15 durch die Ausschwemmpumpe 10 zur Bodenöffnung 19 zwangsgefördert und in den Pumpenanschluß 42 geleitet. Die Ausschwemmpumpe 10 fördert das kalkpartikelhaltige Wasser über den Pumpendruckschlauch 41 und den Geräteabfluß 20 zum Geräteauslauf 21 außerhalb des Gerätes. An der tiefsten Stelle des Pumpenanschlusses 42 ist eine Notablaßöffnung 11 vorgesehen, welche das Ablassen des Wassers erlaubt, wenn die Ausschwemmpumpe 10 versagen sollte. Bei dieser Ausführungsform wird der Wartungsaufwand für den Dampferzeuger minimiert und ebenfalls die erforderlichen Tätigkeiten des Anwenders, da der Reinigungsvorgang vollautomatisch abläuft.

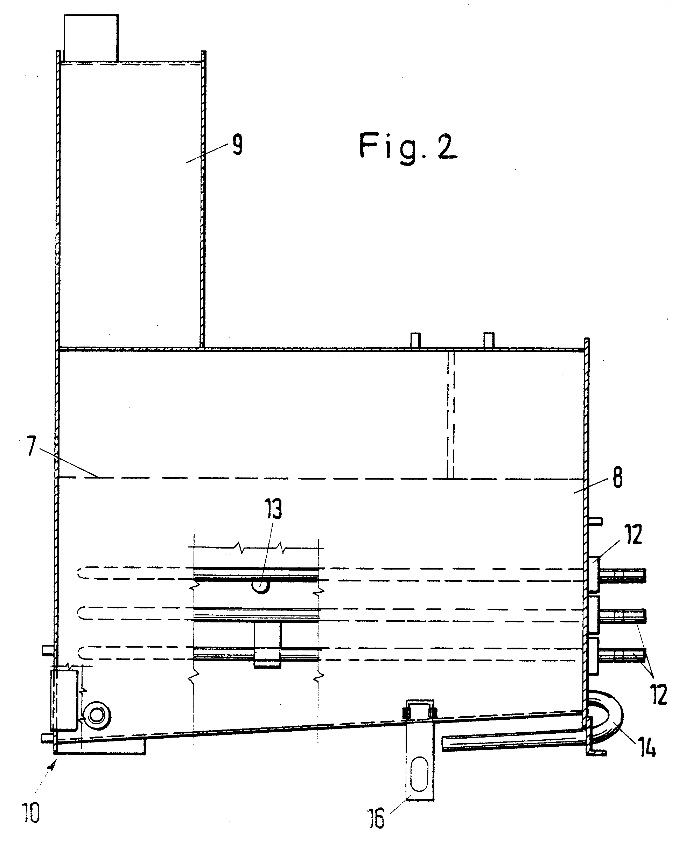

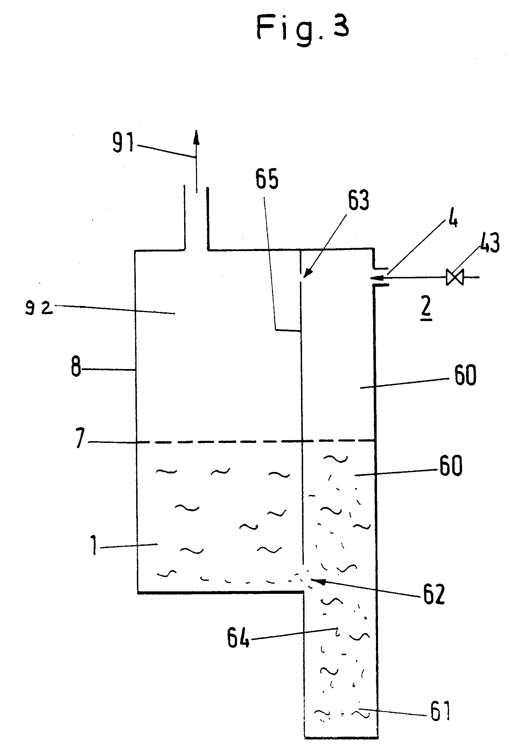

Der Dampferzeuger 1 gemäß Fig. 2 weist wiederum einen Kessel 8 auf, aus dessen domartigen Oberteil 9 bedarfsweise Heißdampf über den Dampfaustrittsstutzen 91 in den Garraum eines nicht gezeigten Gargerätes eingeführt wird. Nahe dem in der Fig. 3 unten gezeigten Boden des Kessels 8 ist eine Ausschwemmpumpe 10 in Form einer elektrisch betätigbaren Kreiselpumpe angeordnet, die im Ruhezustand eine offene Strömungsverbindung zwischen dem in dem Kessel befindlichen Wasser und einem nicht gezeigten Wasserzulauf, der seinerseits oberhalb des Niveaus des im Kessel 8 befindlichen Wassers mit der Atmosphäre kommuniziert, herstellt. Innerhalb des Kessels 8 sind elektrisch beheizbare Heizrohre 12 angeordnet. An der der Ausschwemmpumpe 10 diametral gegenüberliegenden Seite des Kessels 8 befindet sich ein Ausschwemmzufluß 14, der in der weiter unten noch beschriebenen Weise gemeinsam mit der Ausschwemmpumpe 10 betätigbar ist. Eine Halterung 16 dient zum Anbringen des Dampferzeugers 1 an dem Gargerät und bildet keinen Teil der Erfindung. Wichtig ist jedoch, daß in besonders vorteilhafter Weise der Boden des Kessels 8 von dem Ausschwemmzufluß 14 zur Ausschwemmpumpe 10 hin geneigt ist, wodurch gewährleistet werden kann, daß sich abplatzende Kalkpartikel, etc. auf dem Boden des Kessels 8 vorzugsweise im Strömungsweg zwischen dem Ausschwemmzufluß 14 und der Ausschwemmpumpe 10 nahe letzterer ansammeln.

Der Dampferzeuger arbeitet wie folgt: Das Wasserniveau 7 innerhalb des Kessels 8 wird in bekannter Weise mittels einer entsprechenden Niveauregulierung konstant gehalten, d. h., es wird dafür gesorgt, daß über die im Nicht-Entkalkungsbetriebszustand offene Strömungsverbindung durch die Ausschwemmpumpe 10 hindurch immer wieder so viel Wasser in den Kessel 8 nachgeführt wird, je nach Dampfverbrauch und Dampfgerät, daß ein konstantes Wasserniveau eingehalten wird. Im Nicht-Betriebszustand des Dampferzeugers, wenn also kein Dampf zum Garen in dem Gargerät benötigt wird, springt in einstellbaren Intervallen unter gleichzeitigem Öffnen der Wasserzuführung durch den Ausschwemmzufluß 14 hindurch die Ausschwemmpumpe 10 an, wodurch, unter Erzeugung einer kräftigen Wasserströmung am Boden des Kessels 8, die auf dem Boden infolge thermischer Wechselbeanspruchung, etc. durch Abplatzungen und dergleichen angesammelten Kalkpartikel zuverlässig ausgeschwemmt werden. Die Länge der Intervalle zwischen den einzelnen Entkalkungsvorgängen sowie gegebenenfalls auch die Länge der einzelnen Ausschwemmvorgänge sind vorgebbar, und zwar in Abhängigkeit von der abgelaufenen Betriebsdauer und -temperatur des Dampferzeugers.

Fig. 3 zeigt einen Dampferzeuger 1 mit integrierter Dampfpumpe 60. Der Dampferzeuger 1 ist bis zum Normalwasserstand 7 mit Wasser gefüllt. Das Wasser wird durch nicht dargestellte Heizrohre 12 oder dergleichen beheizt und in den Dampfraum 92 verdampft, von wo er über einen Dampfaustrittsstutzen 91 abgeführt werden kann. Die Dampfpumpe 60 besteht aus einem im wesentlichen zylinderförmigen Kessel, wobei eine Wand des Dampferzeugers 60 von wenigstens einem Teil der Wand des Kessels 8 des Dampferzeugers 1 gebildet wird und eine Trennwand 65 mit Dampferzeuger 1 und Dampfpumpe 60 darstellt. Die Trennwand 65 weist eine Dampfverbindung 63 in Form einer Öffnung im oberen Bereich der Dampfpumpe 60 bzw. des Dampfraumes 92 auf sowie eine Wasserverbindung 62 nahe beim Boden des Kessels 8, ebenfalls in Form einer Öffnung. Über diese Öffnungen 62, 63 stehen der Dampferzeuger 1 und die Dampfpumpe 60 miteinander in Verbindung. Unterhalb der Dampfpumpe 60 ist ein Sedimentbehälter 61 vorgesehen, dessen Öffnungsfläche sich über die gesamte Bodenfläche der Dampfpumpe 60 erstreckt. Der Sedimentbehälter 61 ist wegen der verbindenden Öffnung 62 mit dem Dampferzeuger 1 vollständig mit Wasser gefüllt, während die Dampfpumpe 60 bis zum Normalwasserstand 7, also gleich hoch wie der Dampferzeuger 1, mit Wasser gefüllt ist. Im oberen Bereich der Dampfpumpe 60 ist eine Kühleinrichtung 2 vorgesehen. Diese Kühleinrichtung 2 kann ein Flächenkühler mit von der Dampfpumpe 60 getrenntem Kühlkreislauf sein oder, wie hier dargestellt, ein direkter Wasserkühler mit der Zufuhr von Kaltwasser über den Frischwasserzulauf 4 direkt in den oberen Raum der Dampfpumpe 60. Die Zufuhr von Frischwasser oder Kaltwasser wird durch ein Ventil 43 gesteuert. Wenn nun Kaltwasser in die Dampfpumpe eingeführt wird, implodiert der Dampf im oberen Bereich der Dampfpumpe 60 und erzeugt einen Unterdruck, wodurch das Wasser und der Dampf aus dem Dampferzeuger 1 in die Dampfpumpe 60 gesaugt werden. Durch die so entstehende Strömung werden auch die im Wasser des Dampferzeugers sich befindlichen Partikel mitgerissen und im Sedimentbehälter 61 abgefangen und gesammelt. Das in die Dampfpumpe 60 eingeleitete Frischwasser vermischt sich weiterhin mit dem Wasser in der Dampfpumpe 60 und kühlt dieses ab, so daß eine übersättigte Kalklösung in der Dampfpumpe 60 entsteht. Dabei kommt es zu einer intensiven Bildung von Kalkpartikeln bereits in der Dampfpumpe 60. Durch den Druckausgleich im oberen Bereich der Dampfpumpe 60 strömt das Wasser aus der Pumpe über die Öffnung des Sedimentbehälters in den Kessel hinein, wobei die im Wasser befindlichen Kalkpartikel in dem Sedimentbehälter 61 abgelagert werden, so daß ein Großteil des im zugeleiteten Wassers enthaltenden Kalkes überhaupt nicht in den Dampferzeuger 1 gelangt. Das aus dem Dampferzeuger 1 in die Dampfpumpe 60 strömende Wasser hat auf die Seitenwände und die Bodenfläche des Kessels 8 eine erosive Wirkung, wodurch dort anlagernde Kalkreste, etc. abgetragen werden. Da der Sedimentbehälter 61 die gesamte Bodenfläche der Dampfpumpe 60 umfaßt, wird sichergestellt, daß der größte Teil der in die Dampfpumpe 60 gelangenden Kalkpartikel in den Sedimentbehälter 61 ausgefällt wird.

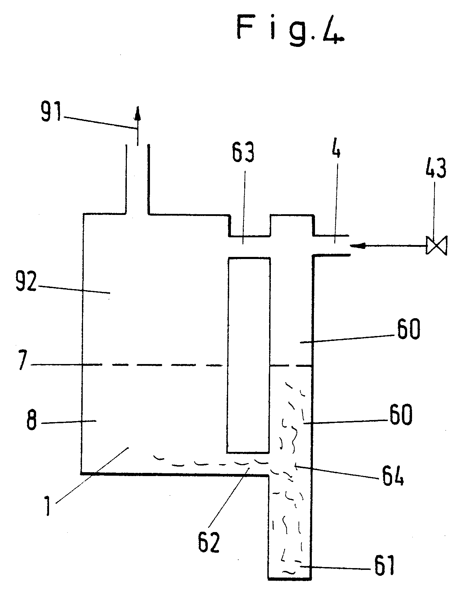

Fig. 4 zeigt einen Dampferzeuger 1 mit separat ausgebildeter Dampfpumpe 60, wobei die Dampfpumpe 60 über eine Wasserverbindung 62 und eine Dampfverbindung 63, die beide als Röhre oder dergleichen ausgestaltet sind, kommunizieren. Der Raum zwischen dem Dampferzeuger 1 und der Dampfpumpe 60 kann mit isolierendem Material ausgefüllt sein. Durch die getrennte Anordnung von Dampferzeuger 1 und Dampfpumpe 60 wird gewährleistet, daß eine gute thermische Trennung zwischen den beiden Aggregaten besteht, was den durch die Kühlung zu erzielenden Effekt begünstigt. Die Dampfpumpe 60 ist wieder ein im wesentlichen zylindrischer Körper, der bis zum Normalwasserstand 7 ebenso wie der Dampferzeuger 1 mit Wasser gefüllt ist. Im oberen Bereich der Dampfpumpe 60 ist wiederum ein Frischwasserzulauf 4 für Kaltwasser vorgesehen, wobei der Wasserzulauf über ein Ventil 43 gesteuert wird. Funktionablauf und Wirkungsweise entsprechen der Ausführungsform nach Fig. 4.

### Bezugszeichenliste

- 1: Dampferzeuger
- 2: Kühleinrichtung
- 4: Frischwasserzulauf
- 5: Saugrohr
- 7: Normalwasserstand
- 8: Kessel
- 9: Oberteil
- 10: Ausschwemmpumpe
- 11: Notablaßöffnung
- 12: Heizrohre
- 13: Temperatursensor
- 14: Ausschwemmzufluß
- 15: Spüldüse
- 16: Halterung
- 18: Überfüllwasserstand
- 19: Bodenöffnung
- 20: Geräteabfluß
- 21: Geräteauslauf
- 41: Pumpendruckschlauch
- 42: Pumpenanschluß
- 43: Ventil
- 51: Masseelektrode
- 52: Normalwasserstands-Sensor
- 53: Überfüllwasserstands-Sensor
- 54: Schenkel
- 55: Schenkel
- 56: Scheitel des Saugrohres
- 57: Saugrohrauslauf
- 60: Dampfpumpe
- 61: Sedimentbehälter
- 62: Wasserverbindung
- 63: Dampfverbindung
- 64: Kalk- und Schmutzpartikel
- 65: Trennwand
- 91: Dampfaustrittsstutzen
- 92: Dampfraum

## Patentansprüche

1. Dampferzeuger für Gargeräte, insbesondere für im Kombinationsbetrieb mit Heißluft und Heißdampf arbeitende Tisch- oder Standgeräte für die Gastronomie, Großküchen oder dergleichen, mit einem wassergefüllten Kessel mit einem automatischen niveauregulierten Wasserzulauf, einem Dampfauslaß zum bedarfsweisen automatischen Einführen von Heißdampf in den Garraum des Gargerätes und einer intervallweise arbeitenden Heizeinrichtung in Form von elektrisch oder mittels Gasbeheizung erhitzbaren Wärmetauscherflächen, und einer Entkalkungseinrichtung mit einer nahe dem Boden und der Seitenwand des Kessels angeordneten Wasserablaßeinrichtung zum bedarfsweisen zumindest teilweisen Leeren des Kessels zwecks Ausschwemmens abgeplatzter, am Boden des Kessels sich sammelnder Kalkpartikel, wobei die Wasserablaßeinrichtung eine Einrichtung zum Erzeugen einer Strömung im Dampferzeuger aufweist, welche das Wasser einer Ausscheidevorrichtung zuführt, dadurch gekennzeichnet, daß die in Intervallen in Abhängigkeit von der Betriebsdauer und/oder -temperatur der Heizeinrichtung (12) automatisch sich einschaltende Einrichtung zum Erzeugen einer Strömung eine Ausschwemmpumpe (10) aufweist, wobei nahe dem Boden des Kessels (8) an einer der Ausschwemmpumpe (10) diametral gegenüberliegenden Stelle nahe der Kesselwand ein gemeinsam mit der Ausschwemmpumpe zu- und abschaltbarer Ausschwemmzufluß (14) angeordnet ist.

2. Dampferzeuger nach Anspruch 1, dadurch gekennzeichnet, daß die Ausschwemmpumpe (10) und/oder der Ausschwemmzufluß (14) nahe dem Boden des Kessels (8) die Kesselwand durchsetzen.

3. Dampferzeuger nach Anspruch 1 oder 2, dadurch gekennzeichnet, daß die Heizeinrichtung (12) unter Freilassen eines im wesentlichen strömungshindernisfreien Ausschwemmweges oberhalb des Niveaus der Ausschwemmpumpe (10) und des Ausschwemmzuflusses (14) angeordnet ist.

4. Dampferzeuger nach einem der Ansprüche 1 bis 3, dadurch gekennzeichnet, daß im Strömungsweg zwischen der Ausschwemmpumpe (10) und dem Ausschwemmzufluß (14) Strömungsleitvorrichtungen angeordnet sind.

5. Dampferzeuger nach einem der Ansprüche 1 bis 4, dadurch gekennzeichnet, daß die Ausschwemmpumpe (10) in Ruhestellung eine offene Strömungsverbindung zwischen dem Kessel (8) und dem Wasserzulauf des Gargerätes bildet.

6. Dampferzeuger nach Anspruch 5, dadurch gekennzeichnet, daß der Wasserzulauf einen mit der Atmosphäre oberhalb des Wasserniveaus (7) im Kessel (8) kommunizierenden Überdruckauslaß aufweist.

7. Dampferzeuger nach einem der Ansprüche 1 bis 6, dadurch gekennzeichnet, daß der Boden des Kessels (8) von dem Ausschwemmzufluß (14) zu der Ausschwemmpumpe (10) geneigt verläuft.

8. Dampferzeuger für Gargeräte, insbesondere für im Kombinationsbetrieb mit Heißluft und Heißdampf arbeitende Tisch- oder Standgeräte für die Gastronomie, Großküchen oder dergleichen, mit einem wassergefüllten Kessel mit einem automatischen niveauregulierten Wasserzulauf, einem Dampfauslaß zum bedarfsweisen automatischen Einführen von Heißdampf in den Garraum des Gargerätes und einer intervallweise arbeitenden Heizeinrichtung in Form von elektrisch oder mittels Gasbeheizung erhitzbaren Wärmetauscherflächen, und einer Entkalkungseinrichtung mit einer nahe dem Boden und der Seitenwand des Kessels angeordneten Wasserablaßeinrichtung zum bedarfsweisen zumindest teilweisen Leeren des Kessels zwecks Ausschwemmens abgeplatzter, am Boden des Kessels sich sammelnder Kalkpartikel, wobei die Wasserablaßeinrichtung eine Einrichtung zum Erzeugen einer Strömung im Dampferzeuger aufweist, welche das Wasser einer Ausscheidevorrichtung zuführt, dadurch gekennzeichnet, daß die in Intervallen in Abhängigkeit von der Betriebsdauer und/oder -temperatur der Heizeinrichtung (12) automatisch sich einschaltende Einrichtung zum Erzeugen einer Strömung eine mechanisch betriebene Pumpe oder eine mit dem Dampferzeuger (1) verbundene Dampfpumpe mit einer Kühleinrichtung (4) aufweist, welche über eine Wasserverbindung (62) während des Betriebes des Dampferzeugers (1) das Kesselwasser zum pulsierenden und/oder periodisch wechselnden Strömen bringt und dabei sowohl bereits abgelagerte als auch noch im Kesselwasser befindliche Kalkpartikel mitreißt und zu der als Sedimentbehälter (61) ausgebildeten Ausscheidevorrichtung befördert.

9. Dampferzeuger nach Anspruch 8, dadurch gekennzeichnet, daß der Sedimentbehälter (61) im unteren Bereich der Dampfpumpe (60) angeordnet ist.

## Claims

1. A steam generator for cookers, more particularly table or floor-mounted cookers using a combination of hot air and superheated steam for catering or canteens or the like, comprising a water-filled boiler with an automatically level-regulated water inlet, a steam outlet for introducing superheated steam into the cooking space of the cooker when necessary, a periodically operating heater in the form of electric or gas-heatable heat exchange surfaces and a deliming device comprising a water drain device near the bottom and side wall of the boiler for at least partly emptying the vessel when required in order to flush away flaked-off particles of lime accumulating at the base of the boiler, the water drainage device comprising a means for generating a flow in the steam generator and supplying the water to a separating device, characterised in that the flow-generating device, which switches on automatically at intervals in dependence on the duration of operation and/or temperature of the heater (12), comprises a flushing pump (10), and a flushing inlet (14) for switching on and off together with the flushing pump is disposed near the bottom of the boiler (8) at a place near the boiler wall diametrically opposite the flushing pump (10).

2. A steam generator according to claim 1, characterised in that the flushing pump (10) and/or the flushing inlet (14) extend through the boiler wall near the bottom of the boiler (8).

3. A steam generator according to claim 1 or 2, characterised in that the heater (12) is disposed above the level of the flushing pump (10) and the flushing inlet (14), leaving a substantially obstacle-free flushing path.

4. A steam generator according to any of claims 1 to 3, characterised in that flow-guiding devices are disposed in the flow path between the flushing pump (10) and the flushing inlet (14).

5. A steam generator according to any of claims 1 to 4, characterised in that when the flushing pump (10) is in the inoperative position, it forms an open flow connection between the boiler (8) and the water inlet of the cooker.

6. A steam generator according to claim 5, characterised in that the water inlet has an excess-pressure outlet which communicates with atmosphere above the water level (7) in the boiler (8).

7. A steam generator according to any of claims 1 to 6, characterised in that the bottom of the boiler (8) slopes from the flushing inlet (14) to the flushing pump (10).

8. A steam generator for cookers, more particularly table or floor-mounted cookers using a combination of hot air and superheated steam for catering or canteens or the like, comprising a water-filled boiler with an automatically level-regulated water inlet, a steam outlet for introducing superheated steam into the cooking space of the cooker when necessary, a periodically operating heater in the form of electric or gas-heatable heat exchange surfaces and a deliming device comprising a water drain device near the bottom and side wall of the boiler for at least partly emptying the vessel when required in order to flush away flaked-off particles of lime accumulating at the base of the boiler, the water drainage device comprising a means for generating a flow in the steam generator and supplying the water to a separating device (61), characterised in that the steam pump, which automatically switches on at intervals in dependence on the duration of operation and/or temperature of the heater (12) and communicates with the boiler via a water connection (62) and a steam connection (63) and comprises a cooling device (4), generates a flow during operation of the steam generator (1) by causing the boiler water to flow in pulsating or periodically changing manner, and thus entrains lime particles which have already been deposited or are still in the boiler water and conveys them to the separating device, which is in the form of a sediment container (61).

9. A steam generator according to claim 1, characterised in that the sediment container (61) is disposed in the bottom region of the steam pump (60).

## Revendications

1. Générateur de vapeur pour appareils de cuisson, en particulier pour des appareils qui sont montés sur table ou au sol, fonctionnent en mode combiné à l'air chaud et à la vapeur chaude et sont destinés à la gastronomie, aux cuisines de collectivités et à des usages analogues, comprenant une chaudière remplie d'eau, qui comporte une alimentation en eau à régulation automatique de niveau, une sortie de vapeur pour introduire automatiquement, en fonction des besoins, de la vapeur chaude dans la chambre de cuisson de l'appareil de cuisson, et un dispositif de chauffe à fonctionnement intermittent, conçu par exemple sous la forme de surfaces d'échange thermique chauffées à l'électricité ou au gaz, et comprenant un dispositif de détartrage avec un dispositif de vidange d'eau qui est monté près du fond et de la paroi latérale de la chaudière et qui sert à vider, au moins en partie, la chaudière en fonction des besoins dans le but de chasser les particules de tartre qui se sont détachées et accumulées au fond de la chaudière, le dispositif de vidange d'eau comportant un dispositif pour créer, dans le générateur de vapeur, un courant qui dirige l'eau vers un dispositif de séparation, caractérisé en ce que le dispositif qui se déclenche automatiquement à intervalles réguliers en fonction de la durée et/ou de la température de fonctionnement du dispositif de chauffe (12) comporte, pour créer un courant, une pompe de rinçage (10), une alimentation de rinçage (14) qui peut être fermée et ouverte conjointement avec la pompe de rinçage étant prévue à proximité du fond de la chaudière (8), en un point diamétralement opposé à la pompe de rinçage (10), à côté de la paroi de la chaudière.

2. Générateur de vapeur selon la revendication 1, caractérisé en ce que la pompe de rinçage (10) et/ou la conduite d'alimentation de rinçage (14) traversent la paroi de la chaudière (8) à proximité du fond de cette dernière.

3. Générateur de vapeur selon l'une des revendications 1 ou 2, caractérisé en ce que le dispositif de chauffe (12) est implanté au-dessus du niveau de la pompe de rinçage (10) et de la conduite d'alimentation de rinçage (14), en ménageant un trajet de rinçage sensiblement dépourvu d'obstacles à l'écoulement.

4. Générateur de vapeur selon l'une des revendications 1 à 3, caractérisé en ce que des dispositifs d'orientation du courant sont disposés sur le trajet d'écoulement entre la pompe de rinçage (10) et la conduite d'alimentation de rinçage (14).

5. Générateur de vapeur selon l'une des revendications 1 à 4, caractérisé en ce que, en position de repos, la pompe de rinçage (10) constitue une liaison d'écoulement ouverte entre la chaudière (8) et l'alimentation en eau de l'appareil de cuisson.

6. Générateur de vapeur selon la revendication 5, caractérisé en ce que l'alimentation en eau comporte un dispositif de vidange de surpression qui communique avec l'atmosphère au-dessus du niveau d'eau (7) de la chaudière (8).

7. Générateur de vapeur selon l'une des revendications 1 à 6, caractérisé en ce que le fond de la chaudière (8) est incliné de l'alimentation de rinçage (14) vers la pompe de rinçage (10).

8. Générateur de vapeur pour appareils de cuisson, en particulier pour des appareils qui sont montés sur table ou au sol, fonctionnent en mode combiné à l'air chaud et à la vapeur chaude et sont destinés à la gastronomie, aux cuisines de collectivités et à des usages analogues, comprenant une chaudière remplie d'eau, qui comporte une alimentation en eau à régulation automatique de niveau, une sortie de vapeur pour introduire automatiquement, en fonction des besoins, de la vapeur chaude dans la chambre de-cuisson de l'appareil de cuisson, et un dispositif de chauffe à fonctionnement intermittent, conçu par exemple sous la forme de surfaces d'échange thermique chauffées à l'électricité ou au gaz, et comprenant un dispositif de détartrage avec un dispositif de vidange d'eau qui est monté près du fond et de la paroi latérale de la chaudière et qui sert à vider, au moins en partie, la chaudière en fonction des besoins dans le but de chasser les particules de tartre qui se sont détachées et accumulées au fond de la chaudière, le dispositif de vidange d'eau comportant un dispositif pour créer, dans le générateur de vapeur, un courant qui dirige l'eau vers un dispositif de séparation, caractérisé en ce que, pour créer un courant pendant le fonctionnement, en particulier du générateur de vapeur, la pompe à vapeur qui communique avec la chaudière par un passage d'eau (62) et par un passage de vapeur (63), qui comprend un dispositif de refroidissement (4) et qui se met en marche automatiquement par intermittence en fonction de la durée et/ou de la température de fonctionnement du dispositif de chauffe (12), fait circuler l'eau de la chaudière sous la forme d'un courant de préférence pulsé et/ou périodiquement alterné, entraîne aussi bien les particules de tartre déjà déposées que celles qui se trouvent encore dans l'eau de la chaudière et les dirige vers le dispositif de séparation conçu sous la forme d'une cuve à sédiments.

9. Générateur de vapeur selon la revendication 1, caractérisé en ce que la cuve à sédiments (61) se trouve dans la zone inférieure de la pompe à vapeur (60).
